# EUROPEAN PATENT APPLICATION

(11) **EP 4 252 901 A1**
(43) Date of publication of application: **04.10.2023**
(21) Application number: 21898676.8
(22) Date of filing: 26.11.2021
(51) Int. Cl.: B01J 4/00, B01J 14/00, B01J 19/26, B01J 19/00

(54) **REACTOR**

(30) Priority: 27.11.2020 KR 20200162702
(71) Applicant: Hanwha Solutions Corporation, Jung-gu Seoul 04541 (KR)
(72) Inventor: KIM, Joon Hwan, Daejeon 34128 (KR); RYU, Hyun Cheol, Daejeon 34128 (KR); HAN, Keedo, Daejeon 34128 (KR)
(74) Representative: Berggren Oy
(86) International application number: PCT/KR2021/017640
(87) International publication number: WO 2022/114851

(57) **Abstract**

A reactor according to an embodiment of the present invention, the reactor including: a mixing chamber formed as a circular tube; a first injection nozzle connected to the mixing chamber while maintaining a predetermined spacing along a circumferential direction and configured to inject a first mixture; an annular chamber disposed spaced apart from an outer side of the mixing chamber; a second injection nozzle configured to connect the annular chamber to the mixing chamber to inject a second mixture supplied to the annular chamber in a direction intersecting the injection of the first mixture; and an outlet pipe connected to the mixing chamber to discharge a reactant produced by mixing the first and second mixtures in the mixing chamber, in which the second injection nozzle is spaced apart from the first injection nozzle by a predetermined angle in the circumferential direction.

## Description

### REACTOR

### [Technical Field]

### CROSS-REFERENCE TO RELATED APPLICATION

This application claims priority to and the benefit of Korean Patent Application No. 1 0-2020-0162702 filed in the Korean Intellectual Property Office on November 27, 2020, the entire contents of which are incorporated herein by reference.

The present invention relates to a reactor, and more particularly to a reactor used in a cold phosgenation reaction.

### [Background Art]

Toluene diisocyanate (TDI) synthesis reaction is divided into a cold phosgenation reaction and a hot phosgenation reaction.

The cold phosgenation reaction reacts toluene diamine (TDA) with carbon dichloride oxide (CDC, phosgene) to produce mono carbamoyl chloride salt (MCCS). In order to improve productivity, an amount of injection of TDA and CDC needs to be increased.

However, a reactor currently used for the cold phosgenation reaction is limited in an injection of TDA and CDC due to the structure of the reactor, in which TDA and CDC are injected and interfere with each other in a mixing chamber, thereby increasing differential pressures at a TDA inlet and a CDC inlet.

### [Technical Problem]

The present invention aims to provide a reactor that reduces differential pressures at a first mixture inlet and a second mixture inlet by preventing mutual overlap in a mixing chamber when a first mixture (TDAand solvent) and a second mixture (CDC and solvent) are injected.

### [Technical Solution]

A reactor according to an embodiment of the present invention, the reactor including: a mixing chamber formed as a circular tube; a first injection nozzle connected to the mixing chamber while maintaining a predetermined spacing along a circumferential direction and configured to inject a first mixture; an annular chamber disposed spaced apart from an outer side of the mixing chamber; a second injection nozzle configured to connect the annular chamber to the mixing chamber to inject a second mixture supplied to the annular chamber in a direction intersecting the injection of the first mixture; and an outlet pipe connected to the mixing chamber to discharge a reactant produced by mixing the first and second mixtures in the mixing chamber, in which the second injection nozzle is spaced apart from the first injection nozzle by a predetermined angle θ in the circumferential direction.

The first injection nozzle may be connected in an axial direction of the mixing chamber to inject the first mixture in the axial direction, and the second injection nozzle may be connected to the mixing chamber in a diameter direction to inject the second mixture in the diameter direction.

One or a plurality of first injection nozzles may be provided at one side of the mixing chamber in the axial direction of the mixing chamber along the circumferential direction, one or a plurality of second injection nozzles may be provided in the same number as the first injection nozzle, and in case that the plurality of second injection nozzles are provided, are provided between neighboring first injection nozzles.
Four first injection nozzles may be provided, four second injection nozzles may be provided, and the second injection nozzle may be provided at a position to be spaced apart from the neighboring first injection nozzle by an angle θ of 45° along the circumferential direction.
When a plurality of first injection nozzles and a plurality of second injection nozzles are provided, the second injection nozzle may be provided at a position spaced apart from the two neighboring first injection nozzles by an angle θ2 of 1 to 360°/n (the number of first injection nozzles).
Four first injection nozzles may be provided, four second injection nozzles may be provided, and the second injection nozzle may be provided at a position spaced apart from the two neighboring first injection nozzles by an angle θ2 of 1 to 90°.

The first mixture may be a mixture of toluene diamine (TDA) and a solvent, the second mixture may be a mixture of carbon dichloride oxide (CDC) and a solvent, and the reactant may be mono carbamoyl chloride salt (MCCS).

### [Advantageous Effect]

As described above, in an embodiment, the second injection nozzle and the first injection nozzle in the mixing chamber are spaced apart by a predetermined angle θ in the circumferential direction to reduce differential pressures at the first and second mixture inlets, so that the first mixture (TDA and solvent) and the second mixture (CDC and solvent) may be smoothly injected from the first and second mixture inlets into the mixing chamber. That is, a larger amount of the first and second mixtures may be injected from the first and second mixture inlets into the mixing chamber.

### [Description of the Drawings]

FIG. 1 is a perspective view of a reactor according to an embodiment of the present invention.
FIG. 2 is a cross-sectional view taken along line II-II in FIG. 1.
FIG. 3 is a cross-sectional view taken along the III-III line in FIG. 2.
FIG. 4 is a cross-sectional view of a reactor according to a comparative example.

### [Mode for Invention]

Hereinafter, embodiments of the present invention will be described in detail with reference to the accompanying drawings so that those with ordinary skill in the art to which the present invention pertains may easily carry out the embodiments. However, the present invention may be implemented in various different ways and is not limited to the embodiments described herein. In the drawings, a part irrelevant to the description will be omitted to clearly describe the present invention, and the same or similar constituent elements will be designated by the same reference numerals throughout the specification.

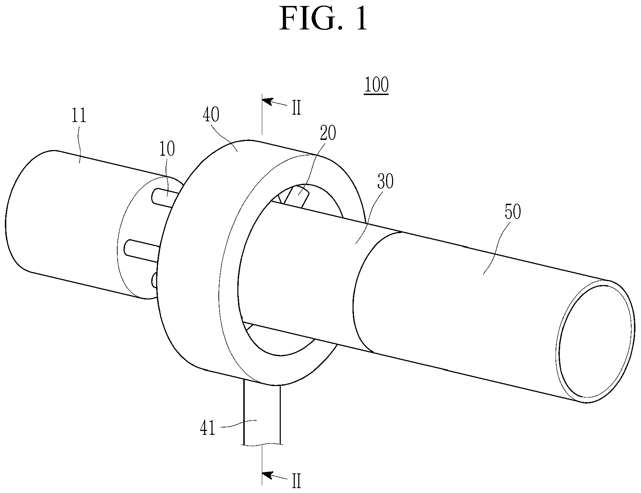

FIG. 1 is a perspective view of a reactor according to an embodiment of the present invention. With reference to FIG. 1, a reactor 100 of an embodiment is formed as a tubular reactor and includes a mixing chamber 30, a first injection nozzle 10, an annular chamber 40, a second injection nozzle 20, and an outlet pipe 50.

The mixing chamber 30 is formed as a circular tube, and the first mixture and the second mixture are mixed to produce a reactant. In an example, the first mixture is a mixture of toluene diamine (TDA) and a solvent, the second mixture is a mixture of carbon dichloride oxide (CDC) and a solvent, and the reactant produced by mixing is mono carbamoyl chloride salt (MCCS).

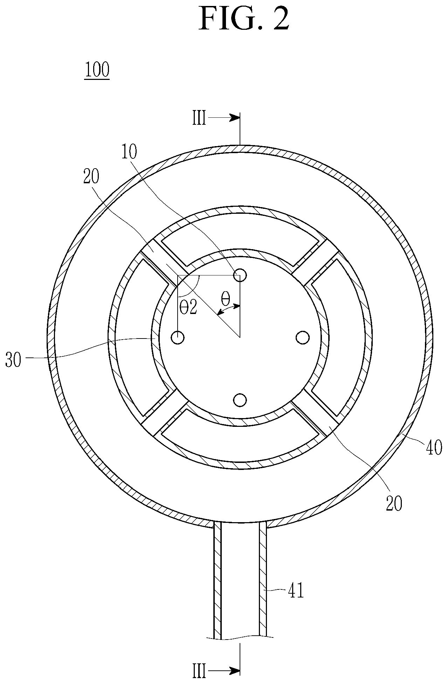

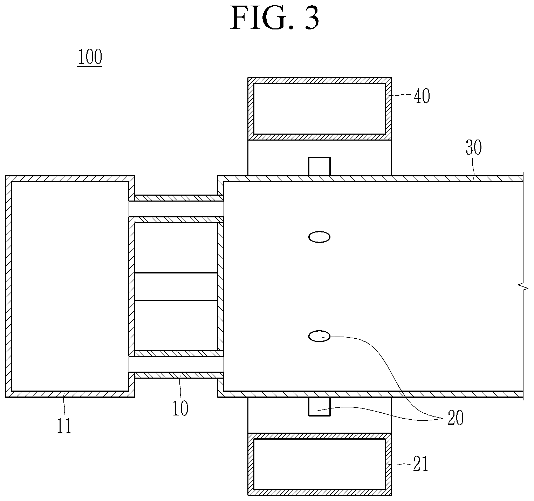

FIG. 2 is a cross-sectional view taken along line II-II in FIG. 1, and FIG. 3 is a cross-sectional view taken along line III-III in FIG. 2.

With reference to FIGS. 1 to 3, the first injection nozzle 10 is connected to a first mixture inlet 11 at one side and connected to the mixing chamber 30 at the other side by maintaining a predetermined spacing along a circumferential direction to inject the first mixture introduced into the first mixture inlet 11 into the mixing chamber 30.

The first injection nozzle 10 is connected to the mixing chamber 30 in an axial direction of the mixing chamber 30 to inject the first mixture in the axial direction. Therefore, the first injection nozzle 10 injects the first mixture into the mixing chamber 30 in the axial direction.

One or a plurality of first injection nozzles 10 are provided at one side of the mixing chamber in the axial direction of the mixing chamber 30 along a circumferential direction of the mixing chamber 30. For example, one to ten first injection nozzles 10 may be used. Therefore, depending on a position of the first injection nozzle 10, the first mixture is injected along the circumferential direction inside the mixing chamber 30, resulting in a portion that is injected intensively and a portion that is injected dispersively.

An annular chamber 40 is disposed spaced apart from an outer side of the mixing chamber 30, and is connected outwardly to a second mixture inlet 41 and inwardly to a second injection nozzle 20. That is, the annular chamber 40 is disposed on the outer side of the mixing chamber 30 to enable a second mixture to be injected through the second injection nozzle 20 in a diameter direction of the mixing chamber 30, and to enable the second mixture to be injected at various positions along the circumferential direction.

The second injection nozzle 20 connects the annular chamber 40 and the mixing chamber 30 to inject the second mixture supplied to the annular chamber 40 into the mixing chamber 30. The annular chamber 40 allows the second mixture to be injected through the second injection nozzle 20 along the circumferential direction of the mixing chamber 30.

The second injection nozzle 20 is connected to the mixing chamber 30 in the diameter direction. Therefore, the second injection nozzle 20 injects the second mixture into the mixing chamber 30 in the diameter direction.

One or a plurality of second injection nozzles 20 may be provided in the same number as the first injection nozzle 10, and may be spaced apart from the first injection nozzle 10 by a predetermined angle θ in the circumferential direction.

When a plurality of first injection nozzles 10 and a plurality of second injection nozzles 20 are provided, the second injection nozzles 20 are provided between neighboring first injection nozzles 10. The second injection nozzle 20 may be provided at a position spaced apart from the two neighboring first injection nozzles 10 by an angle θ2 of 1 to 360°/n (the number of first injection nozzles).

For example, one to ten second injection nozzles 20 may be used. Therefore, the second mixture is intensively injected inside the mixing chamber 30 in the circumferential direction at a portion that the first mixture is injected dispersedly.

An angle θ between the first and second injection nozzles 10 and 20 along the circumferential direction and an angle θ2 between the first, second, and first injection nozzles 10, 20, and 10 prevent interference between the first mixture injected in the axial direction and the second mixture injected in the diameter direction, thereby reducing differential pressures at the first and second mixture inlets 11 and 41.

Therefore, a smooth injection of the first and second mixtures into the mixing chamber 30 from the first and second mixture inlets 11 and 41 is possible. That is, a larger amount of the first and second mixtures may be injected into the mixing chamber 30.

For convenience, in an embodiment, four first injection nozzles 10 are provided, and four second injection nozzles 20 are provided, which are positioned at an angle θ of 45° to be spaced apart from the neighboring first injection nozzle 10 along the circumferential direction. In addition, the second injection nozzle 20 is provided at a position spaced apart from the two neighboring first injection nozzles 10 by an angle θ2 of 1 to 90°.

The outlet pipe 50 is connected to the mixing chamber 30 and discharges the reactant produced by mixing the first and second mixtures in the mixing chamber 30. The outlet pipe 50 is formed as a tube that expands away from the mixing chamber 30 to allow for rapid discharge of the reactant, mono carbamoyl chloride salt (MCCS).

Hereinafter, a comparative example of the present invention are described. The description of the same configuration as the embodiment is omitted, and the description of different configurations is included.

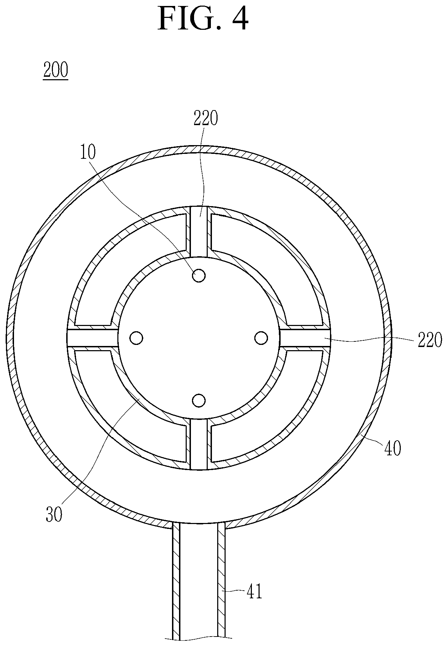

FIG. 4 is a cross-sectional view of a reactor according to a comparative example. With reference to FIG. 4, in a reactor 200 of the comparative example, one or a plurality of second injection nozzles 220 may be provided in the same number as the first injection nozzle 10, and may be provided to be overlapping with the first injection nozzle 10 in the circumferential direction. Four second injection nozzles 220 are provided in overlapping positions along the circumferential direction with the four first injection nozzles 10.

At the overlapping positions of the first and second injection nozzles 10 and 220, the first mixture injected in the axial direction and the second mixture injected in the diametrical direction interfere with each other in the mixing chamber 30, increasing differential pressures at the first and second mixture inlets 11 and 41. Therefore, it is difficult to smoothly inject the first and second mixtures from the first and second mixtures inlets 11 and 41 into the mixing chamber 30. That is, a smaller amount of the first and second mixtures are injected into the mixing chamber 30.

Table 1 shows differential pressures at the first and second mixture inlets 11 and 41 exemplified in an embodiment and a comparative example.

**(Table 1)**

| | Comparative Example | Embodiment |
|---|---|---|
| Injection capacity of first mixture inlet of TDA + solvent | 24,168 [kg/hr] | |
| Injection capacity of second mixture inlet of CDC + solvent | 36,496 [kg/hr] | |
| Differential pressure [pa] of first mixture inlet of TDA + solvent | 1,025,800 | 471,370 |
| Differential pressure [pa] of second mixture inlet of CDC + solvent | 1,742,300 | 1,182,600 |

### Embodiment

The first mixture (TDA + solvent) was injected into the mixing chamber 30 through the first injection nozzle 10 of the reactor 100 in FIG. 1, and the second mixture (CDC + solvent) was injected into the mixing chamber 30 through the second injection nozzle 20, and the first mixture and the second mixture were mixed in the mixing chamber 30 to produce a reactant of mono carbamoyl chloride salt (MCCS). In this case, the first mixture injection capacity of the first mixture inlet 11 was 24,168 kg/hr, and the second mixture injection capacity of the second mixture inlet 41 was 36,496 kg/hr.

### Comparative Example

The first mixture (TDA + solvent) was injected into the mixing chamber 30 through the first injection nozzle 10 of the reactor 200 in FIG. 4, and the second mixture (CDC + solvent) was injected into the mixing chamber 30 through the second injection nozzle 220, and the first mixture and the second mixture were mixed in the mixing chamber 30 to produce a reactant of mono carbamoyl chloride salt (MCCS). In this case, the first mixture injection capacity of the first mixture inlet 11 was 24,168 kg/hr, and the first mixture injection capacity of the second mixture inlet 41 was 36,496 kg/hr.

### Experimental Example 1

The differential pressure at the first mixture inlet 11 and the differential pressure at the second mixture inlet 41 for the Embodiment and the Comparative Example were measured. The Embodiment showed differential pressure of 471,370 Pa at the first mixture inlet 11 and 1,182,600 Pa at the second mixture inlet 41, while the Comparative Example showed higher differential pressure of 1,025,800 Pa at the first mixture inlet 11 and 1,742,300 Pa at the second mixture inlet 41.

As such, in the Embodiment, the second injection nozzle 20 is provided at a position spaced apart from the neighboring first injection nozzle 10 at an angle θ of 45° along the circumferential direction, and the second injection nozzle 20 is provided at a position spaced apart from the two neighboring first injection nozzles 10 at an angle θ2 of 1° to 90°, thereby reducing the differential pressures at the first and second mixture inlets 11 and 41 so that the first mixture (TDA and solvent) and the second mixture (CDC and solvent) may be more smoothly injected into the mixing chamber 30. That is, the in the Embodiment, more of the first mixture (TDA and solvent) and the second mixture (CDC and solvent) may be injected into the mixing chamber 30.

While the exemplary embodiments of the present invention have been described above, the present invention is not limited thereto, and various modifications can be made and carried out within the scope of the claims, the detailed description of the invention, and the accompanying drawings, and also fall within the scope of the invention.

### (Description of Reference Numerals)

| | | | |
|---|---|---|---|
| 10: | First injection nozzle | 11: | First mixture inlet |
| 20: | Second injection nozzle | 30: | Mixing chamber |
| 40: | Annular chamber | 41: | Second mixture inlet |
| 50: | Outlet pipe | 100: | Reactor |
| θ: | Angle | | |

## Claims

1. A reactor comprising:
a mixing chamber formed as a circular tube;
a first injection nozzle connected to the mixing chamber while maintaining a predetermined spacing along a circumferential direction and configured to inject a first mixture;
an annular chamber disposed spaced apart from an outer side of the mixing chamber;
a second injection nozzle configured to connect the annular chamber to the mixing chamber to inject a second mixture supplied to the annular chamber in a direction intersecting the injection of the first mixture; and
an outlet pipe connected to the mixing chamber to discharge a reactant produced by mixing the first and second mixtures in the mixing chamber,
wherein the second injection nozzle is spaced apart from the first injection nozzle by a predetermined angle θ in the circumferential direction.

2. The reactor of claim 1, wherein:
the first injection nozzle is connected in an axial direction of the mixing chamber to inject the first mixture in the axial direction, and
wherein the second injection nozzle is connected to the mixing chamber in a diameter direction to inject the second mixture in the diameter direction.

3. The reactor of claim 1, wherein:
one or a plurality of first injection nozzles are provided at one side of the mixing chamber in the axial direction of the mixing chamber along the circumferential direction, and
wherein one or a plurality of second injection nozzles are provided in the same number as the first injection nozzle, and in case that the plurality of second injection nozzles are provided, are provided between neighboring first inleting nozzles.

4. The reactor of claim 3, wherein:
four first injection nozzles are provided,
wherein four second injection nozzles are provided,
and wherein the second injection nozzle is provided at a position to be spaced apart from the neighboring first injection nozzle by an angle θ of 45° along the circumferential direction.

5. The reactor of claim 1, wherein:
when a plurality of first injection nozzles and a plurality of second injection nozzles are provided,
the second injection nozzle is provided at a position spaced apart from the two neighboring first injection nozzles by an angle θ2 of 1 to 360°/n (the number of first injection nozzles).

6. The reactor of claim 5, wherein:
four first injection nozzles are provided,
wherein four second injection nozzles are provided,
the second injection nozzle is provided at a position spaced apart from the two neighboring first injection nozzles by an angle θ2 of 1 to 90°.

7. The reactor of claim 1, wherein:
the first mixture is a mixture of toluene diamine (TDA) and a solvent, and
wherein the second mixture is a mixture of carbon dichloride oxide (CDC) and a solvent, and
wherein the reactant is mono carbamoyl chloride salt (MCCS).
